Europäisches Patentamt

**European Patent Office**

**Office européen des brevets**

(19)

(11) Veröffentlichungsnummer: **0 258 678**
**B1**

(12)
# EUROPÄISCHE PATENTSCHRIFT

(45) Veröffentlichungstag der Patentschrift:
**07.11.90**

(51) Int. Cl.⁵: **C21B 13/00**

(21) Anmeldenummer: **87111454.2**

(22) Anmeldetag: **07.08.87**

(54) **Verfahren zur herstellung von Eisen aus feinkörnigen Eisenerzen.**

(30) Priorität: **30.08.86 DE 3629589**

(43) Veröffentlichungstag der Anmeldung:
**09.03.88 Patentblatt 88/10**

(45) Bekanntmachung des Hinweises auf die Patenterteilung:
**07.11.90 Patentblatt 90/45**

(84) Benannte Vertragsstaaten:
**ES FR GB IT SE**

(56) Entgegenhaltungen:
**EP-A- 0 122 239**
**WO-A-80/01808**
**DE-A- 3 439 070**
**DE-B- 2 424 932**
**GB-A- 2 078 779**

(73) Patentinhaber: **MANNESMANN Aktiengesellschaft,
Mannesmannufer 2, D-4000 Düsseldorf 1(DE)**

(72) Erfinder: **Hoster, Irmgard, Dr.,
Walter-Hohmann-Strasse 17, D-4300 Essen 1(DE)**
Erfinder: **Hoster, Thomas, Dr.,
Walter-Hohmann-Strasse 17, D-4300 Essen 1(DE)**
Erfinder: **Neuschütz, Dieter, Dr., Neckarstrasse 49,
D-4300 Essen 18(DE)**
Erfinder: **Radke, Dietrich, Dr., An der Hoffnung 16,
D-4030 Ratingen 5(DE)**

(74) Vertreter: **Meissner, Peter E., Dipl.-Ing. et al,
Patentanwaltsbüro Meissner & Meissner,
Herbertstrasse 22, D-1000 Berlin 33(DE)**

**Beschreibung**

Die vorliegende Erfindung bezieht sich auf ein Verfahen zur Herstellung von Eisen aus feinkörnigen Eisenerzen.

Es ist bereits bekannt, daß man Eisen aus oxidischen Eisenerzen in der Weise herstellen kann, daß man das Erz zunächst durch Direktreduktion mit einem geeigneten Gas in weitgehend metallisierten Eisenschwamm überführt, welcher unter Zugabe von Zuschlagstoffen und ggf. Schrott in einem mit einer Metallschmelze gefüllten geeigneten Gefäß eingeschmolzen wird. Im Schmelzgefäß wird dabei durch Reaktion von sauerstoffhaltigen Gasen mit kohlenstoffhaltigen Substanzen, insbesondere Kohlen- und/oder Koksstaub, die vorzugsweise unterhalb der Badoberfläche in die Metallschmelze eingeblasen werden, wärme- und kohlenmonoxidhaltiges Abgas gebildet, wobei die Wärme teilweise zum Einschmelzen des Eisenschwamms und das Abgas zur Direktreduktion genutzt wird. Zur erhöhten Ausnutzung der in das Verfahren einzubringenden Stoff- und Energiemengen ist auch schon vorgeschlagen worden, das Abgas des Schmelzgefäßes mit kohlenstoffhaltigen Substanzen, vorzugsweise mit Kohlenstaub sowie mit Wasserdampf und/oder Kohlendioxid, in einem Reaktor zur Reaktion zu bringen und nach einer Konditionierung, insbesondere einer Heißentstaubung, durch Zumischen zu dem Reduktionsgas, das in der Reduktionsstufe teilweise in einen mit der Gasaufbereitung versehenen Kreislauf geführt wird, zur Direktreduktion der eisenoxidhaltigen Rohstoffe zu verwenden (DE-AS 24 24 932). Bekannt ist schließlich ein Verfahren, das durch die Kombination verschiedener Maßnahmen gekennzeichnet ist und bei dem die Vorwärmung der feinkörnigen Eisenerze in einem Gegenstromwärmeaustauscher bei 500 bis 850 °C und die Reduktion der feinkörnigen Eisenerze mit den fast ausschließlich aus Kohlenmonoxid bestehenden Abgasen des Schmelzprozesses in einem Wirbelschichtreaktor bei 500 bis 850 °C zu Eisenschwamm erfolgt, dessen Metallisierungsgrad 40 bis 95% beträgt. Der Eisenschwamm wird dabei vom Reduktionsgas abgetrennt, wobei die Restreduktion und das Einschmelzen in einer Eisenschmelze erfolgt, bei der Sauerstoff-, Eisenschwamm und Kohlenstoffträger durch unterhalb der Badoberfläche angeordnete Mehrmanteldüsen in die Eisenschmelze eingebracht werden. Die Restreduktion und das Einschmelzen des Eisenschwamms erfolgen in dem Schmelzgefäß, dem ein Teil des geschmolzenen Eisens laufend entnommen wird (DE-AS 24 01 909).

Die vorliegende Erfindung bezweckt, die bekannten Verfahren zu verbessern und die Voraussetzungen dafür zu schaffen, daß in einem integrierten Prozeß, was bisher noch nicht möglich gewesen ist, in wirtschaftlicher Weise alle Kohlesorten von gasarmen Antraziten bis zu gasreichen Flammkohlen eingesetzt werden können. Auch soll ein in einen Gesamtprozeß zu integrierender Direktredutkionsprozeß als Feinkornreduktionsprozeß ausgebildet werden, bei dem in besonders kostengünstiger Weise das Erz ohne vorherige Agglomeration eingesetzt werden kann. Schließlich sollen nicht nur die latente und spezifische Wärme des Abgases eines Schmelzvergasers möglichst weitgehend innerhalb des integrierten Gesamtprozesses nutzbar gemacht und energie- und kostenaufwendige Prozeßschritte, wie z.B. $CO_2$-Wäschen, vermieden werden, sondern soll auch in den für die Reduktionskinetik und damit den Umsatz besonders günstigen Temperaturbereichen gearbeitet werden können.

Diese Aufgabe wird durch ein Verfahren mit den Merkmalen des Anspruchs 1 der vorliegenden Anmeldung gelöst. Dieses Verfahren ist nicht nur außerordentlich wirtschaftlich, sondern schafft insbesondere auch die Möglichkeit, Kohlesorten einzusetzen, die bisher nicht verwendet werden konnten.

In den Unteransprüchen werden zweckmäßige und vorteilhafte Ausgestaltungen des Verfahrens nach Anspruch 1 angegeben.

Das den Gegenstand der Erfindung bildende Verfahren ist anhand der Zeichnungen näher erläutert, und zwar zeigt.

Fig. 1 das Verfahrensschema vom Einbringen des Feinerzes bis zum Abstich des gewonnenen Eisens,

Fig. 2 die Reduktionsstufe des Verfahrens in schematischer Darstellung und

Fig. 3 die Reduktionsstufe in einer anderen Ausführungsform.

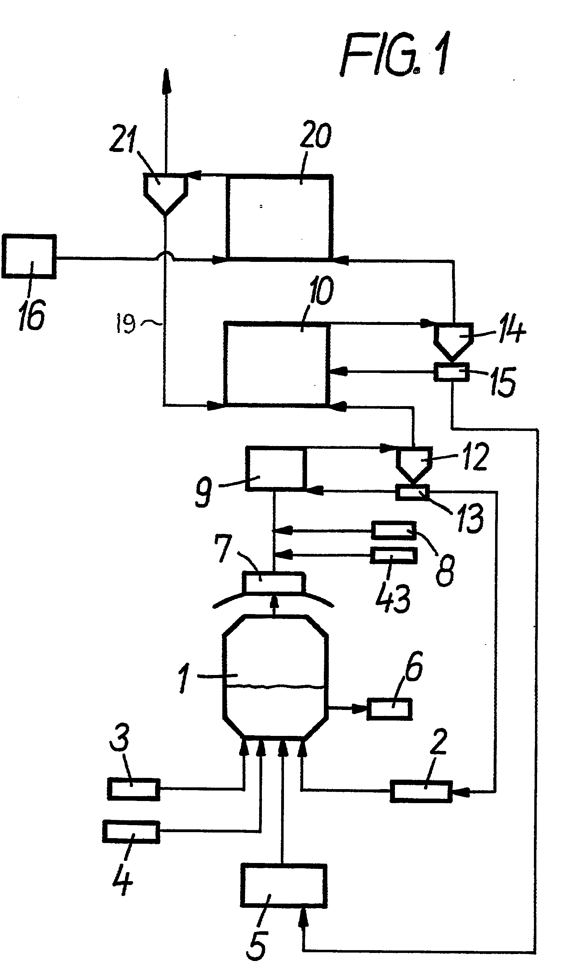

Nach dem in Fig. 1 dargestellten Verfahrensschema wird einem Schmelzvergaser 1 aus einem Bunker druck 2 mit zugeteilte verschwelte Kohle sowie in Ergänzung dazu aus dem Bunker 3 unverschwelte Kohle zusammen mit Sauerstoff aus der Leitung 4 zugeführt. Im Schmelzvergaser befindet sich ein Eisenbad, das durch Einschmelzen von Eisenschwamm, der in noch näher zu beschreibender Weise im Prozeß erzeugt worden ist, gebildet wird. Der Eisenschwamm wird dem Schmelzvergaser 1 aus dem Bunker 5 zugeführt zusammen mit nicht näher gekennzeichneten Zuschlägen zur Bildung einer basischen Schlacke, die bekannten Stahlschmelztechnologien entspricht.

Die aus den Bunkern 2 und/oder 3 ins Eisenbad, vorzugsweise pneumatisch mit einer sogenannten COIN-Düse,eingebrachte Feinkohle wird mit Sauerstoff aus der Leitung 4 im Eisenbad zu Kohlenmonoxid und Wasserstoff umgesetzt. Die dabei frei werdende Wärme dient zum Einschmelzen weiter zugeführten Eisenschwamms. Das erschmolzene Eisen und die gebildete Schlacke werden über den Abstich 6 abgestochen. Das im Eisenbad durch die Umsetzung von Feinkohle und/oder feinkörnigem Schwelkoks und Sauerstoff gebildete Gas, das vorwiegend aus Kohlenmonoxid und Wasserstoff besteht, verläßt den Einschmelzvergaser mit der Temperatur des Eisenbades über die den Schmelzvergaser dichtend abdeckende Gasfanghaube 7.

Dem mit der Schmelztemperatur strömenden Gas wird aus dem Dosierbunker 8 Feinkohle so dosiert zugesetzt, daß sich hinter der Verschwelungsstrecke 9 eine Gastemperatur einstellt, die zur Aufrechterhaltung der Reduktionstemperatur in der Fertigreduktionsstufe 10 ausreicht. Es wird höchstens die Feinkohlemenge zugesetzt, die zur Aufrechterhaltung des Wärmehaushalts des Schmelzvergasers 1 erforderlich ist. Falls mit dieser Feinkohlemenge eine ausreichende Abkühlung des Reduktionsgases nicht erreicht wird, kann aus dem Dosierbunker 8 zusätzlich Feinkohle gemeinsam mit stöchiometrischen Mengen an Wasserdampf oder Kohlendioxid zugesetzt werden, so daß diese Feinkohle in der Verschwelungsstrecke 9 zusätzlich vollständig vergast wird.

Die in der Verschwelungsstrecke 9 nicht in Gas umgesetzte Kohle wird in einem Zyklonsystem 12 von der Gasphase abgetrennt. Ein Teilstrom kann bei noch nicht ausreichender Abtrennung flüchtiger Bestandteile in die Verschwelungsstrecke 9 über den Strömungsteiler 13 zurückgeführt werden. Der andere Teilstrom, oder bei vollständiger Abtrennung flüchtiger Bestandteile die gesamte Schwelkoksmenge, aus dem Zyklonsystem 12 wird dem Bunker 2 zugeführt.

Zur Dosierung der dem heißen Gas zuzusetzenden Feinkohle und zur Durchführung der Verschwelungsreaktion unter Verwendung des überschüssigen Wärmeinhalts kann vorzugsweise eine Vorrichtung verwendet werden, wie sie beispielsweise in der DE-PS 27 02 693 beschrieben ist; doch können auch andere Dosierungssysteme eingesetzt werden.

Das weitegehend vom Schwelkoks im Zyklonsystem 12 befreite Reduktionsgas wird zur Reduktion in die Reduktionsstufe 10 eingebracht, der eine noch näher zu beschreibende Prozeßstufe 20 vorgeschaltet ist und die mit einem weiteren Zyklonsystem 14 und einer Weiche 15 in Verbindung steht. Mit 16 ist ein Bunker für das einzusetzende feinkörnige Erz und mit 21 ein drittes Zyklonsystem bezeichnet, in dem das aus der Prozeßstufe 20 austretende Gas von in ihm vorhandenem Feststoff getrennt wird.

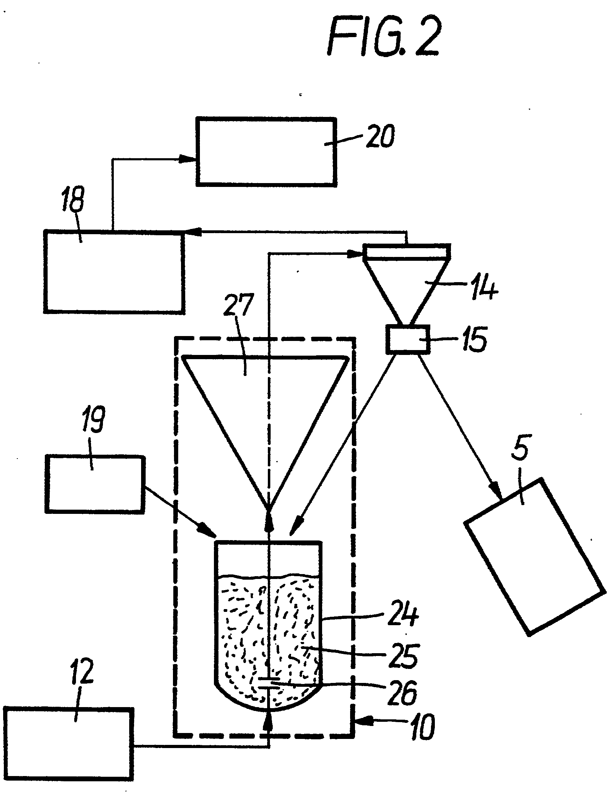

In Fig. 2 ist eine Vorrichtung zur dosierten Beladung des Reduktionsgases mit dem zu reduzierenden vorbehandelten Erz und zur Durchführung der Fertigreduktion dargestellt, in der die Reduktionsstufe mit gestrichelten Linien kenntlich gemacht ist. Dabei wird das Erz aus der noch näher zu beschreibenden Prozeßstufe 20 über die Leitung 19 und den Dosierer 24 dem aus dem Zyklonsystem 12 strömenden Reduktionsgas im Dosierspalt 26 zugesetzt, wobei die Dosierung durch die Höhe der Schüttsäule 25 erfolgt. Mit zunehmender Höhe der Schüttsäule erhöht sich die Feststoffbeladung des Reduktionsgases im Dosierspalt 26. Das Reduktionsgas gibt einen Teil seiner fühlbaren Wärme an den Feststoff ab, so daß die Feststofftemperatur auf die Reduktionstemperatur von 700 bis 1100 °C ansteigt. Das mit dem zu reduzierenden Feststoff beladene Reduktionsgas strömt in den Wirbeltrichter 27 und bildet hier eine überkritische Wirbelschicht. Bei einer besonders vorteilhaften Ausführungsform der Erfindung können zur Verlängerung der Verweilzeit mehrere in Reihe geschaltete Wirbeltricher verwendet werden.

Der aus dem oder den überkritisch betriebenen Wirbeltrichtern ausgetragene Feststoff wird im Zyklonsystem 14 weitgehend vom Gas getrennt und über die Weiche 15 entweder in den Dosierer 24 zur Bildung der Schüttsäule 25 zurückgeführt oder bei Vorliegen eines ausreichenden Reduktionsgrades in den Eisenschwammbunker 5 überführt. Erforderlichenfalls können zwei oder mehr Einheiten nach Fig. 2 hintereinandergeschaltet werden, wobei zwischen diesen Einheiten Reduktionsgas und Feststoff gegenläufig geführt werden kann. In diesem Fall wird das frische Reduktionsgas aus dem Zyklonsystem 12, in Flußrichtung des Feststoffes gesehen, der letzten Reduktionseinheit zugeführt.

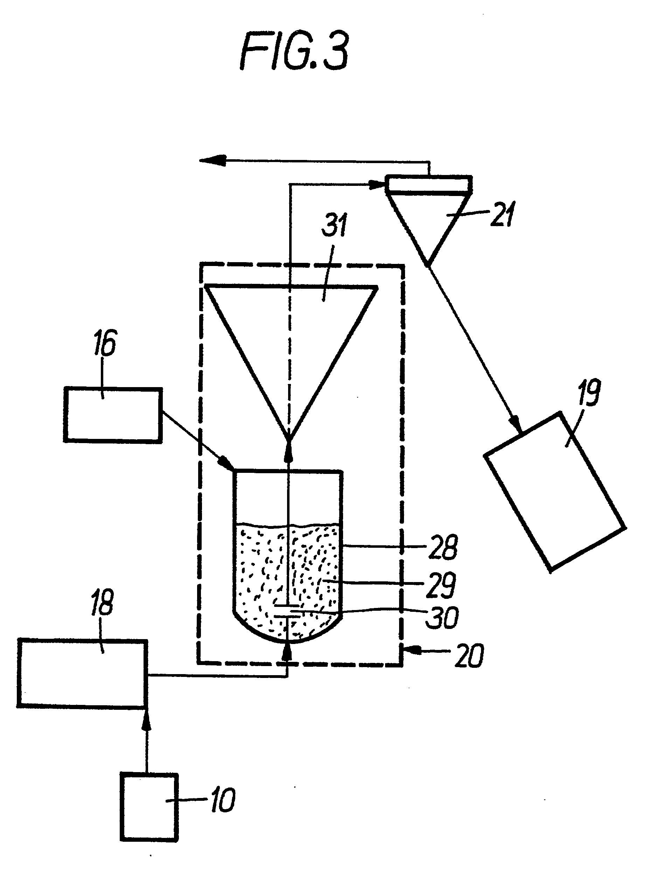

Das nach Einstellung des gewünschten Reduktionsgrades in der Zyklonanlage 14 vom Feststoff befreite Gas enthält noch größere Anteile an Kohlenmonoxid und Wasserstoff. Dieses Gas wird in einer weiteren Prozeßstufe 20, die in Fig. 3 mit gestrichelten Linien dargestellt ist, mit frischem kalten Erz aus dem Bunker 16 in Kontakt gebracht. Dabei wird eine Temperatur eingestellt, bei der die Spaltung des Kohlenmonoxids in C und $CO_2$ besonders günstig abläuft. Der Ablauf einer solchen Reaktion ist in "Stahl und Eisen", 79. Jahrgang, Heft 3, S. 129 bis 134, beschrieben. Die Feststoffbeladung des aus der Reduktionsstufe 10 über das Gasführungssystem 18 in den Dosierer 28 strömenden Gases wird über die Höhe der Schüttsäule 29 bestimmt. Etwaige Überschußwärme aus dem Kohlenmonoxidzerfall wird über Wärmeaustauscherflächen in dem Wirbeltrichter 31 abgeführt. Zur Verlängerung der Gasverweilzeit können auch mehrere der in Fig. 3 dargestellten Wirbeltrichter hintereinandergeschaltet werden. Das Gas wird schließlich im Zyklonsystem 21 vom Feststoff getrennt und über ein Kammersystem entsorgt. Der Feststoff gelangt über die Leitung 19 in die Reduktionsstufe 10.

Ein Ausführungsbeispiel des Verfahrens nach der Erfindung ist in folgender Weise durchgeführt worden.

Einem Schmelzvergaser mit flüssigem Eisenbad wurden 420 kg verschwelte Kohle zugeführt, die mit Überschußwärme des im Schmelzvergaser erzeugten Gases verschwelt worden war. Ferner wurden 400 $m_n^3$ Sauerstoff, 40 kg Kalk und 1 t feinkörniger Eisenschwamm zugeführt, wobei der Eisenschwamm 85 kg auf den Eisenschwammpartikeln niedergeschlagenen Kohlenstoff enthielt. Der Eisenschwamm war im Reduktionsprozeß unter Verwendung des im Schmelzvergaser erzeugten Reduktionsgases erzeugt worden und hatte einen Metallisierungsgrad von 90 %. Erzeugt worden sind 0,9 t Eisen und 0,18 t Schlacke, die aus dem Schmelzvergaser abgestochen wurden.

Das im Schmelzvergaser erzeugte Reduktionsgas hatte eine Temperatur von 1550 bis 1580 °C und bestand vorwiegend aus Kohlenmonoxid und Wasserstoff neben geringen Anteilen von Stickstoff und Kohlendioxid sowie weiteren gasförmigen Stoffen, die aus in der Kohle enthaltenen Bestandteilen gebildet worden sind. Dem heißen Gas wurden 600 kg Kohle mit 30 % flüchtigen Bestandteilen zugesetzt. Nach der Verschwelung wurden über einen Zyklon 420 kg verschwelte Kohle aus dem Gas abgetrennt, die zum weiteren Einsatz im Schmelzvergaser gebracht wurde. Nach der Abtrennung der verschwelten Kohle war aus dem gesamten Kohleumsatz eine Gasmenge von etwa 1000 $m_n^3$ mit etwa 80 % CO und 20 % $H_2$ entstanden. Die Reduktionsanlage bestand dabei aus zwei hinterneinandergeschaltete Einheiten der in Fig. 1 und 2 beschriebenen Prozeßstufe 10. Das von der Feinkohle befreite Gas ist zunächst von der in Richtung des Feststoffflusses gesehenen zweiten Reduktionseinheit zugeführt worden. Hier wurde der Feststoff aus der vorangegangenen Reduktionsstufe zu einem Metallisierungsgrad von etwa 90 % reduzierte. Das in einem Zyklonsystem 14 vom Feststoff befreite Gas hatte eine Zusammensetzung von etwa 56 % CO, 15 % $H_2$, 24 % $CO_2$ und 5 % $H_2O$. Das Gas wurde in die erste, der Prozeßstufe 10 entsprechenden Reduktionsstufe geleitet und dort mit dem Feststoff aus der Prozeßstufe 20 beladen. Nach Abtrennung des Feststoffs in einer Zyklonanlage betrug die Gaszusammensetzung etwa 43 % CO, 12 % $H_2$, 37 % $CO_2$ und 8 % $H_2O$. Das Gas wurde in die Prozeßstufe 20 überführt, in der der CO-Zerfall erfolgte, der abgetrennte vorreduzierte Feststoff der nachfolgenden Reduktionsstufe zugeführt. In der CO-Zerfallsstufe wurde durch Wärmeaustauscher eine Wärmemenge ausgekoppelt und im Prozeß durch Regelung der Beladung des Gases mit frischem Feststoff eine Temperatur in der überkritisch gefahrenen Wirbelschichtanlage 31 von etwa 550 °C eingestellt. Die Verweilzeit des Gases in diesem Temperaturbereich betrug etwa 11 sec. Danach hatte sich ein Gas mit 12 % CO, 13 % $H_2$, 64 % $CO_2$ und 10 % $H_2O$ eingestellt, durch Abspaltung von 85 kg Kohlenstoff aus CO. Die Gasmenge verringerte sich durch die Zerfallsreaktion auf etwa 840 $m_n^3$. Der abgespaltene Kohlenstoff bildete auf der Oberfläche des feinkörnigen Erzes eine fest haftende Schicht in einer Menge, die auch in den späteren Reduktionsstufen nicht abgebaut werden konnte, so daß der gesamte integrierte Prozeß an keiner Stelle durch Stickingerscheinungen gestört wurde.

## Patentansprüche

1. Verfahren zur Herstellung von Eisen aus feinkörnigen Eisenerzen, bei dem durch Einschmelzen von Eisenschwamm in einem Schmelzvergaser ein Eisenbad erzeugt wird, in dem durch Umsetzen von feiner Kohle und/oder Schwelkoks und Sauerstoff ein Gas erzeugt wird, das zur Direktreduktion des Eisenerzes dient, **wobei:** daß die Temperatur des im Schmelzvergaser entstehenden Reduktionsgases durch Einblasen von Feinkohle in den Gasstrom auf die in der Reduktionsstufe erforderliche Reduktionstemperatur eingestellt und die verschwelte Kohle aus dem Gasstrom vor dessen Einsatz im Reduktionsprozeß ausgekoppelt und in den Schmelzvergaser zurückgeführt wird, die Reduktion des Eisenerzes bei einer Temperatur von 700 bis 1100 °C in einer ein- oder mehrstufigen, umlaufenden Wirbelschicht erfolgt und das feinkörnige Eisenerz vor der Reduktion mit dem aus der Reduktionsstufe austretenden Gas bei einer Temperatur von 450 bis 700 °C so in Verbindung gebracht wird, daß ein Teil des im Gas vorhandenen Kohlenmonoxids auf den Erzteilchen eine Kohlenstoffschicht bildet und die beim Kohlenmonoxidzerfall frei werdende Wärme mit der Wärme des austretenden Gases zum Aufheizen des kalten Eisenerzes benutzt wird.

2. Verfahren zur Herstellung von Eisen aus feinkörnigen Eisenerzen nach Anspruch 1, dadurch gekennzeichnet, daß in den aus dem Schmelzvergaser austretenden Gasstrom höchstens die Feinkohlemenge eingeblasen wird, die im Schmelzvergaser zur Aufbringung der Schmelzwärme, der Restreduktionswärme und der Wärmeverluste notwendig ist.

3. Verfahren zur Herstellung von Eisen aus feinkörnigen Eisenerzen nach Anspruch 2, dadurch gekennzeichnet, daß zur weiteren Temperaturabsenkung des aus dem Schmelzvergaser austretenden Gases zusätzliche Kohle mit stöchiometrischen Mengen an Wasserdampf eingeblasen wird.

4. Verfahren zur Herstellung von Eisen aus feinkörnigen Eisenerzen nach Anspruch 3, daduch gekennzeichnet, daß zur Temperaturabsenkung auch $CO_2$ eingeblasen wird.

5. Verfahren zur Herstellung von Eisen aus feinkörnigen Eisenerzen nach einem der vorhergehenden Ansprüche, dadurch gekennzeichnet, daß das Erz eine Korngröße hat, die kleiner als 2 mm ist.

6. Verfahren zur Herstellung von Eisen aus feinkörnigen Eisenerzen nach Anspruch 5, dadurch gekennzeichnet, daß das Erz eine Korngröße von weniger als 200 µm hat.

7. Verfahren zur Herstellung von Eisen aus feinkörnigen Eisenerzen nach einem der vorhergehenden Ansprüche, dadurch gekennzeichnet, daß in der Reduktionsstufe eine Temperatur von 700 bis 1100 °C eingestellt wird.

8. Verfahren zur Herstellung von Eisen aus feinkörnigen Eisenerzen nach Anspruch 7, dadurch gekennzeichnet, daß in der Reduktionsstufe eine Temperatur zwischen 800 und 900 °C eingestellt wird.

9. Verfahren zur Herstellung von Eisen aus feinkörnigen Eisenerzen nach einem der vorhergehenden Ansprüche, dadurch gekennzeichnet, daß ein Teil der im Schmelzvergaser eingesetzten Kohle aus der Regelstufe für das Reduktionsgas ausgekoppelter feinkörniger Schwelkoks ist.

10. Verfahren zur Herstellung von Eisen aus feinkörnigen Eisenerzen nach einem der vorhergehenden Ansprüche, dadurch gekennzeichnet, daß in der CO-Zerfallstufe ausgekoppelte Wärme zum Vorheizen der eingesetzten Feinkohle dient.

11. Verfahren zur Herstellung von Eisen aus feinkörnigen Eisenerzen nach einem der vorhergehenden Ansprüche, dadurch gekennzeichnet, daß in der CO-Zerfallstufe ausgekoppelte Wärme zum Aufheizen des in der Regelstufe des Reduktionsgases einzusetzenden Wasserdampfes verwendet wird.

12. Verfahren zur Herstellung von Eisen aus feinkörnigen Eisenerzen nach einem der vorhergehenden Ansprüche, dadurch gekennzeichnet, daß der Eisenschwamm mit einer Temperatur bis zu 700 °C pneumatisch im Stickstoffstrom in den Schmelzvergaser eingebracht wird.

13. Verfahren zur Herstellung von Eisen aus feinkörnigen Eisenerzen nach einem der vorhergehenden Ansprüche, dadurch gekennzeichnet, daß auf den Erzteilchen mindestens 2 bis 15 Gew.-% Kohlenstoff abgeschieden werden, bevor diese in die Reduktionsstufe eingebracht werden.

14. Verfahren zur Herstellung von Eisen aus feinkörnigen Eisenerzen nach einem der vorhergehenden Ansprüche, dadurch gekennzeichnet, daß in der CO-Zerfallstufe das Gas im Temperaturbereich von 400 bis 600 °C eine Verweilzeit bis zu 15 sec. hat.

15. Verfahren zur Herstellung von Eisen aus feinkörnigen Eisenerzen nach einem der vorhergehenden Ansprüche, dadurch gekennzeichnet, daß der CO-Zerfall in einem Wirbelschichtreaktor stattfindet.

## Claims

1. A process for the production of iron from fine-grained iron ores, in which by fusing iron sponge in a gasser an iron bath is produced in which, by converting fine coal and/or carbonised coke and oxygen, a gas is produced which is used for the direct reduction of the iron ore, where the temperature of the reduction gas produced in the gasser is set at the reduction temperature required in the reduction stage by blowing fine coal into the gas stream and before the gas stream is used in the reduction process the carbonised coal from the gas stream is output-coupled and returned to the gasser, the reduction of the iron ore is carried out at a temperature of 700 to 1100°C in a one-stage or multi-stage, circulating fluidised bed and prior to the reduction the fine-grained iron ore is brought into contact with the gas emerging from the reduction stage at a temperature of 450 to 700°C in such manner that a part of the carbon monoxide present in the gas forms a carbon layer on the ore particles and the heat released during the decomposition of the carbon monoxide together with the heat from the emerging gas is used to heat the cold iron ore.

2. A process for the production of iron from fine-grained iron ores as claimed in Claim 1, characterised in that the maximum quantity of fine coal which is blown into the gas stream emerging from the gasser is that which is necessary in the gasser to produce the fusion heat, the residual reduction heat and the heat losses.

3. A process for the production of iron from fine-grained iron ores as claimed in Claim 2, characterised in that to further reduce the temperature of the gas emerging from the gasser, additional coal is blown in together with stoichiometric quantities of water vapour.

4. A process for the production of iron from fine-grained iron ores as claimed in Claim 3, characterized in that for the temperature reduction $CO_2$ is also blown in.

5. A process for the production of iron from fine-grained iron ores as claimed in one of the preceding Claims, characterised in that the ore has a grain size which is smaller than 2 mm.

6. A process for the production of iron from fine-grained iron ores as claimed in Claim 5, characterised in that the ore has a grain size of less than 200 μm.

7. A process for the production of iron from fine-grained iron ores as claimed in one of the preceding Claims, characterised in that a temperature of 700 to 1100°C is set in the reduction stage.

8. A process for the production of iron from fine-grained iron ores as claimed in Claim 7, characterised in that a temperature of between 800 and 900°C is set in the reduction stage.

9. A process for the production of iron from fine-grained iron ores as claimed in one of the preceding Claims, characterised in that a part of the coal used in the gasser is fine-grained carbonised coke output-coupled from the regulating stage for the reduction gas.

10. A process for the production of iron from fine-grained iron ores as claimed in one of the preceding Claims, characterised in that heat output coupled in the CO-decomposition stage is used to preheat the fine coal which is fed in.

11. A process for the production of iron from fine-grained iron ores as claimed in one of the preceding Claims, characterised in that heat output coupled in the CO-decomposition stage is used to heat the water vapour which is to be used in the regulating stage of the reduction gas.

12. A process for the production of iron from fine-grained iron ores as claimed in one of the preceding Claims, characterised in that the iron sponge is introduced pneumatically into the gasser at a temperature of up to 700°C in the nitrogen stream.

13. A process for the production of iron from fine-grained iron ores as claimed in one of the preceding Claims, characterised in that at least 2 to 15 weight % carbon is deposited onto the particles of ore before they are introduced into the reduction stage.

14. A process for the production of iron from fine-grained iron ores as claimed in one of the preceding Claims, characterised in that in the CO-decomposition stage the gas has a dwell time of up to 15 sec. in the temperature range of 400 to 600°C.

15. A process for the production of iron from fine-grained iron ores as claimed in one of the preceding Claims, characterised in that the CO-decomposition takes place in a fluidised bed reactor.

## Revendications

1. Procédé de production de fer à partir de minerais de fer à grain fin, charactérisé en ce que par fusion d'éponge de fer dans un générateur de gaz à bain fondu (1), on produit un bain de fer fondu dans lequel, par décomposition de charbon fin et/ou de coke dégazéifié et d'oxygène, on produit un gaz qui sert à la réduction directe du minerai de fer, la température du gaz réducteur formé dans le générateur de gaz à bain fondu étant réglée, par insufflation de charbon fin dans le courant de gaz, à la température de réduction qui est nécessaire dans l'étage de réduction (10) et le charbon dégazéifié étant séparé du courant gazeux avant l'introduction de ce courant dans le processus de réduction, et renvoyé au générateur de gaz à bain fondu (1), la réduction du minerai de fer se produisant à une température de 700 à 1100°C dans un lit fluidisé circulant, à un ou plusieurs étages, et le minerai de fer à grain .fin étant mis en contact avant la réduction avec le gaz sortant de l'étage de réduction (10), à une température de 450 à 700°C, uns partie de l'oxyde de carbone présent dans le gaz formant une couche de carbone sur les particules de minerai et la chaleur dégagée pendant la décomposition de l'oxyde de carbone étant utilisée avec la chaleur du gaz sortant pour chauffer le minerai de fer froid.

2. Procédé de production de fer à partir de minerais de fer à grain fin selon la revendication 1, caractérisé en ce que, dans le courant de gaz sortant du générateur de gaz à bain fondu (1), on insuffle au maximum la quantité de charbon fin dont on a besoin dans le générateur de gaz à bain fondu pour dégager la chaleur de fusion, la chaleur de réduction résiduelle et les pertes de chaleur.

3. Procédé de production de fer à partir de minerais de fer à grain fin selon la revendication 2, caractérisé en ce que, pour abaisser davantage la température du gaz sortant du générateur de gaz à bain fondu (1), on insuffle une quantité additionnelle de charbon avec des quantités stoechiométriques de vapeur d'eau.

4. Procédé de production de fer à partir de minerais de fer à grain fin selon la revendication 3, caractérisé en ce que, pour abaisser la température, on insuffle aussi du $CO_2$.

5. Procédé de production de fer à partir de minerais de fer à grain fin selon une des revendications précédentes, caractérise en ce que le minerai possède une grosseur de grain qui est inférieure à 2 mm.

6. Procédé de production de fer à partir de minerais de fer à grain fin selon la revendication 5, caractérisé en ce que le minerai possède une grosseur de grains de moins de 200 μm.

7. Procédé de production de fer à partir de minerais de fer à grain fin selon une des revendications précédentes, caractérisé en ce que, dans l'étage de réduction (10), on règle la température sur une valeur de 700 à 1100°C.

8. Procédé de production de fer à partir de minerais de fer à grain fin selon la revendication 7, caractérisé en ce que, dans l'étage de réduction (10), on règle la température sur une valeur entre 800 et 900°C.

9. Procédé de production de fer à partir de minerais de fer à grain fin selon une des revendications précédentes, caractérisé en ce qu'une partie du charbon mise en œuvre dans le générateur de gaz à bain fondu (1) est un coke dégazéifié à grain fin qui est décourpé de l'étage de réglage opérant sur le gaz réducteur.

10. Procédé de production de fer à partir de minerais de fer à grain fin selon une des revendications précédentes, caractérisé en ce que la chaleur découplée dans l'étage de décomposition du CO sert à préchauffer le charbon fin utilisé.

11. Procédé de production de fer à partir de minerais de fer à grain fin selon une des revendications précédentes, characérisé en ce que que la chaleur découplée dans l'étage de décomposition du CO est utilisée pour chauffer la vapeur d'eau utilisée dans l'étage de réglage de gaz réducteur.

12. Procédé de production de fer à partir de minerais de fer à grain fin selon une des revendications précédentes, caractérisé en ce que l'éponge de fer est chargée: dans le générateur de gaz à bain fondu (1), à une température allant jusqu'à 700°C, par transport pneumatique dans un courant d'azote.

13. Procédé de production de fer à partir de minerais de fer à grain fin selon une des revendications précédentes, caractérisé en ce qu'on fait précipiter sur les particules de minerai au moins 2 à 15% en poids de carbone avant que ces particules ne soient introduites dans l'étage de réduction (10).

14. Procédé de production de fer à partir de minerais de fer à grain fin selon une des revendications précédentes, caractérisé en ce que le gaz a un temps de séjour allant jusqu'à 15 secondes dans l'étage de décomposition du CO, dans l'intervalle de température de 400 à 600°C.

15. Procédé de production de fer à partir de minerais de fer à grain fin selon une des revendications précédentes, caractérisé en ce que la décomposition du CO se produit dans un réacteur à lit fluidisé.

# FIG. 1

# FIG. 2

# FIG.3